# EUROPEAN PATENT SPECIFICATION

(11) **EP 0 476 853 B1**
(45) Date of publication and mention of the grant of the patent: **23.10.1996**
(21) Application number: 91307772.3
(22) Date of filing: 23.08.1991
(51) Int. Cl.: C09B 19/02, C09B 69/06, C09B 67/34, D06P 1/42

(54) **Triphenodioxazine dyes**
Triphenodioxazin-Farbstoffe.
Colorants triphénodioxaziniques

(30) Priority: 19.09.1990 GB 9020416
(43) Date of publication of application: 25.03.1992
(73) Proprietor: ZENECA LIMITED, London W1Y 6LN (GB)
(72) Inventor: Cropper, George Keith, Manchester M25 6ES (GB); Norris, William Joseph Edwin, Appley Bridge, Lancs WN6 9DG (GB); Ridyard, Denis Robert Annesly, Stockport, Cheshire SK7 5BL (GB)
(74) Representative: Giles, David Eric

(56) References cited:
- EP-A- 0 034 725
- EP-A- 0 095 255
- DE-A- 3 430 287
- FR-A- 1 134 493
- FR-A- 2 413 445
- GB-A- 1 295 825

## Description

This invention relates to triphenodioxazine dyes, to methods for their manufacture and to their use for dyeing cellulosic substrates.

EP-A-0095255 describes a class of basic dyes comprising a coloured triphenodioxazine cation and a colourless anion. The nature of the anion is said to be not critical, examples being given of dyes having acetate and chloride anions. It has now been found that the use of certain anions can provide triphenodioxazine basic dyes having particularly high water-solubility

Accordingly, the first aspect of the present invention provides a dye of Formula (1): 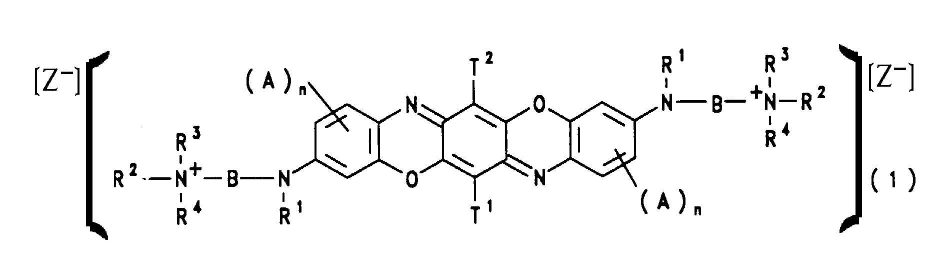 wherein:
- each of T¹ and T²,: independently, represents hydrogen, halogen, alkyl, alkoxy, aryl, aryloxy, cyano, optionally substituted amino or a carboxylic acid ester group;
- A: represents halogen, alkyl or alkoxy;
- n: has a value of 0, 1 or 2;
- R¹: represents hydrogen or an optionally substituted hydrocarbon radical;
- B: represents an optionally substituted divalent hydrocarbon radical;
- each of R², R³ and R⁴,: independently represents hydrogen or an optionally substituted hydrocarbon radical; and
- Z⁻: represents HCOO⁻ or CH₃CHOHCOO⁻.

When any of the groups T¹, T², R¹, R², R³, R⁴ and B are substituted the substituents are preferably selected from halo, especially chloro; hydroxy; carboxy; sulpho; amino; -CN; C₁₋₄-alkoxy, especially methoxy; C₁₋₄-alkyl, especially methyl; and acetamido.

As examples of optionally substituted phenyl radicals represented by T¹ or T² there may be mentioned phenyl and sulphophenyl. It is preferred that both of T¹ and T² are halo or C₁₋₄-alkyl, especially Cl or Br.

A is preferably C₁₋₄-alkyl or C₁₋₄-alkoxy. It is preferred that n is 0.

The optionally substituted hydrocarbon radicals represented by R¹, R², R³ and R⁴ are each independently preferably optionally substituted alkyl, cycloalkyl, aralkyl and aryl radicals, more preferably alkyl radicals, especially C₁₋₄-alkyl radicals which are substituted by halogen, hydroxy or cyano, or preferably are free from substituents. It is preferred that R¹, R², R³ and R⁴ are all H.

The optionally substituted divalent hydrocarbon radicals represented by B are preferably optionally substituted alkylene, aralkylene and arylene radicals and the preferred optional substituents are selected from halo, hydroxy and C₁₋₄-alkyl. When B is alkylene it preferably contains less than seven carbon atoms, more preferably less than four carbon atoms, and most preferably contains two or three carbon atoms. When B is aralkylene it preferably contains less than thirteen carbon atoms. When B is arylene it is preferably phenylene or naphthylene.

As examples of alkylene and aralkylene radicals which may be represented by B, there may be mentioned:
ethylene
1,2- and 1,3-propylene
2-hydroxy-1,3-propylene
1- and 2-phenyl-1,3-propylene
2-(4′-sulphophenyl)-1,3-propylene
1,4-, 2,3- and 2,4-butylene
2-methyl-1,3-propylene
2-methyl-2,4-pentylene
2.2-dimethyl-1,3-propylene
1-phenylethylene
1-chloro-2,3-propylene
1,6- and 2,5-hexylene
2,3-diphenyl-1,4-butylene
1-(methoxycarbonyl)-1,5-pentylene
1-carboxy-1,5-pentylene
2,7-heptylene
3-methyl-1,6-hexylene
-CH₂CH₂OCH₂CH₂-
-CH₂CH₂SCH₂CH₂₋
-CH₂CH₂SSCH₂CH₂-

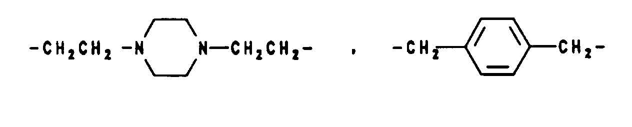

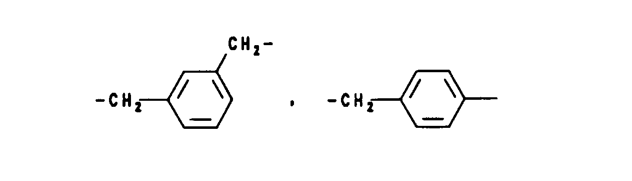

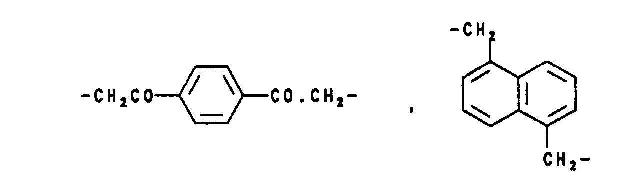

As examples of arylene radicals which may be represented by B, there may be mentioned 1,3- and 1,4-phenylene, 1,4-naphthylene.

The compounds of Formula (1) in which Z represents CH₃CHOHCOO⁻ are preferable where low odour is desired, whereas compounds of Formula (1) wherein Z represents HCOO⁻ are preferable because of their particularly high water solubility where odour is not a significant consideration.

The dyes of Formula (1) may be prepared by desulphonation of compounds which, in their neutral form, are of the Formula (2): 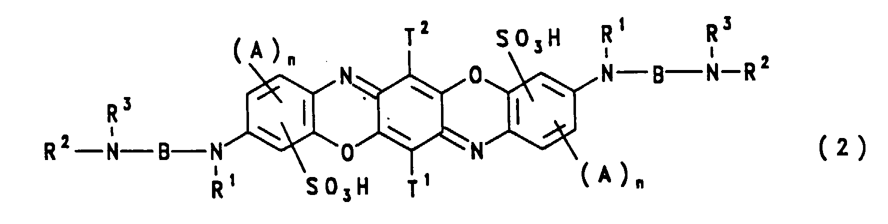 followed by conversion to the salt or quaternary ammonium compound, the symbols T¹, T², A, n, B, R¹, R² and R³ having the meanings already given.

It is preferred that after the compound of Formula (2) has been desulphonated it is isolated from an aqueous medium at a pH sufficiently high to ensure that none of the nitrogen atoms in the dye are protonated, for example at a pH of at least 8.5, more preferably about 8.5 to 9.5, especially at a pH of around 9. The preference for isolation at a high pH results from the surprising finding that a dye so isolated is more soluble in an aqueous solution of a weak acid than the same dye isolated at pH 7.

Desulphonation of the compound of Formula (2) may be achieved by heating in the presence of a mineral acid, for example sulphuric acid, preferably in the presence of sulphuric acid having a concentration in excess of 80% by weight. Suitable reaction temperatures are in the range of 90°C to 150°C or thereabouts.

Conversion to the formate or lactate salt may be achieved by analogous methods to those used for preparation of the acetic acid salts except that acetic acid is replaced by formic and/or lactic acid.

The symmetrical dyes of Formula (2) may themselves be prepared by reacting 2,3,5,6-tetrachloro-1,4-benzoquinone (or a corresponding compound wherein T¹ and T² have the other meanings given above) with 2 moles of a diamine of the formula: 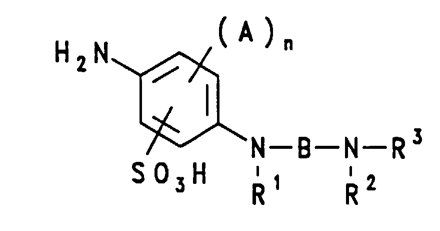 and heating the resulting dianilide in the presence of a strongly acid condensing agent, for example oleum, to effect ring closure.

The dyes of Formula (1) may be isolated, and if desired purified by conventional means used for basic triphenodioxazine dyes. The dyes typically have a blue shade and are useful for the coloration of materials such as paper, pulp, textiles, leather, ink and lacquers. They have high tinctorial strengths and good light fastness on cellulosic substrates and have especially high affinity for paper, the backwaters from paper dyeing frequently being substantially clear.

The high solubility of a dye of Formula (1) is of value because it enables high strength aqueous solutions thereof to be prepared, and consequently storage space and transport costs for such solutions are reduced as the amount of water in the solutions is reduced.

According to a further aspect of the present invention there is provided liquid dye preparation comprising a dye of Formula (1) and liquid media, wherein said dye is completely dissolved. The preferred liquid media comprises water. It is preferred that the liquid dye preparation of this aspect of the present invention contain at least three, and especially at least five, and preferably below thirty parts of dye per 100 parts of liquid media (wherein all parts are by weight).

It will be understood that the terms "dye" and "dyes" used as nouns in this specification are not intended to limit the invention to compounds intended for use in dyeing.

According to a third aspect of the present invention there is provided a method for the colouration of textiles, and in particular paper, by applying thereto a liquid dye preparation described in the second aspect of the present invention.

### Example 1

### (a) Preparation of the dyebase of Formula (3)

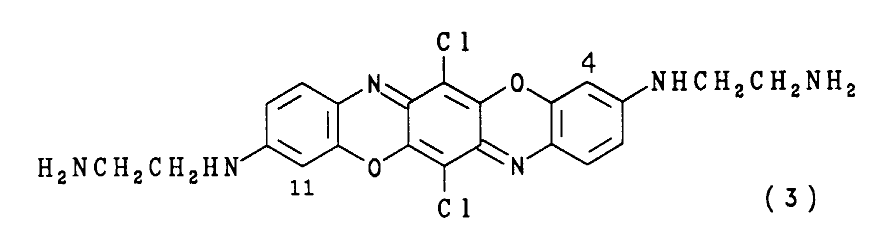

98% sulphuric acid (432g) was added to ice (38g) and cooled to room temperature. A compound of Formula (3) having a sulpho group at each of the 4 and 11 positions (54g) was desulphonated by adding to the sulphuric acid solution at room temperature and heating at 110°C with stirring for 3 hours. The solution was then cooled and stirred overnight. The resultant product was drowned out into an ice water mixture (500g) and the temperature was maintained below 20°C by the addition of ice. The pH of the solution was adjusted to 7 using NaOH before filtering off the solid product of Formula (3).

### (b) Preparation of formate and lactate salts of the compound of Formula (3)

The solubility of the product from step (a) was then determined in the following aqueous solvent systems.

| Solvent | Solubility (% w/w) |
|---|---|
| 25% formic acid | 5.3 |
| 50% formic acid | 7.5 |
| 85% formic acid | 24.7 |
| | |
| 25% lactic acid | 4.8 |
| 50% lactic acid | 4.9 |
| 88% lactic acid | 4.8 |

The solubility of the products from step (a) in 50% aqueous acetic acid was found to be 2.52% w/w.

## Claims

1. A triphenodioxazine dye of Formula (1): 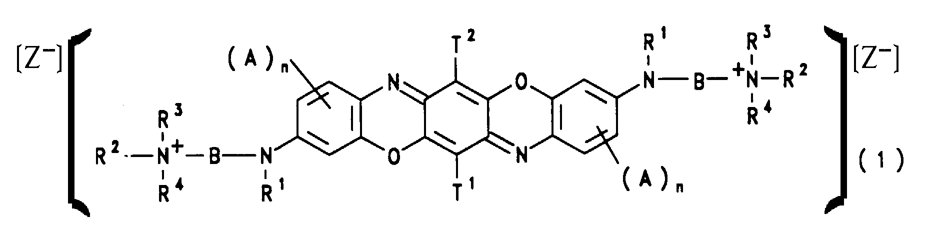 wherein:
each of T¹ and T², independently, represents hydrogen, halogen, alkyl, alkoxy, aryl, aryloxy, cyano, optionally substituted amino or a carboxylic acid ester group;
A represents halogen, alkyl or alkoxy;
n has a value of 0, 1 or 2;
R¹ represents hydrogen or an optionally substituted hydrocarbon radical;
B represents an optionally substituted divalent hydrocarbon radical;
each of R², R³ and R⁴, independently represents hydrogen or an optionally substituted hydrocarbon radical; and
Z⁻ represents HCOO⁻ or CH₃CHOHCOO⁻.

2. A dye according to Claim 1 wherein T¹ and T² are both halo or C₁₋₄-alkyl.

3. A dye according to any one of the preceding claims wherein n has a value of 0.

4. A dye according to any one of the preceding claims wherein R¹, R², R³ and R⁴ are each independently or C₁₋₄-alkyl.

5. A dye according to Claim 4 wherein R¹, R², R³ and R⁴ are each H.

6. A dye according to any one of the preceding claims wherein B is an optionally substituted alkylene, aralkylene or arylene radical.

7. A dye according to any one of the preceding claims wherein B is an alkylene radical containing less than seven carbon atoms.

8. A liquid dye preparation comprising at least three parts of a dye of Formula (1), as defined in Claim 1, and water, wherein said dye is completely dissolved.

9. A method for the coloration of a textile by applying thereto a liquid dye preparation according to Claim 8.

## Patentansprüche

1. Triphenodioxazin-Farbstoff mit der Formel (1): 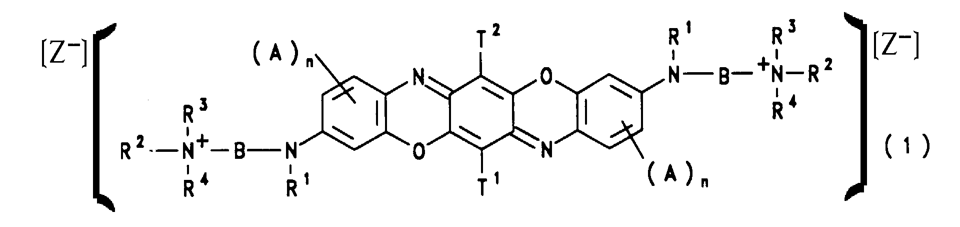 in der:
T¹ und T² jeweils unabhängig voneinander Wasserstoff, Halogen, Alkyl, Alkoxy, Aryl, Aryloxy, Cyano, gegebenenfalls substituiertes Amino oder eine Carbonsäureester-Gruppe darstellen,
A Halogen, Alkyl oder Alkoxy darstellt,
n den Wert 0, 1 oder 2 hat,
R¹ Wasserstoff oder einen gegebenenfalls substituierten Kohlenwasserstoff-Rest darstellt,
B einen gegebenenfalls substituierten zweiwertigen Kohlenwasserstoff-Rest darstellt,
R², R³ und R⁴ jeweils unabhängig voneinander Wasserstoff oder einen gegebenenfalls substituierten Kohlenwasserstoff-Rest darstellen und
Z⁻ HCOO⁻ oder CH₃CHOHCOO⁻ darstellt.

2. Farbstoff nach Anspruch 1, wobei T¹ und T² beide für Halogen oder C₁₋₄-Alkyl stehen.

3. Farbstoff nach einem der vorhergehenden Ansprüche,wobei n den Wert 0 hat.

4. Farbstoff nach einem der vorhergehenden Ansprüche, wobei R¹, R², R³ und R⁴ jeweils unabhängig voneinander für H oder C₁₋₄-Alkyl stehen.

5. Farbstoff nach Anspruch 4, wobei R¹, R², R³ und R⁴ jeweils für H stehen.

6. Farbstoff nach einem der vorhergehenden Ansprüche, wobei B für einen gegebenenfalls substituierten Alkylen-, Aralkylen-oder Arylen-Rest steht.

7. Farbstoff nach einem der vorhergehenden Ansprüche, wobei B für einen Alkylen-Rest steht, der weniger als 7Kohlenstoffatome enthält.

8. Flüssige Farbstoffpräparation, die mindestens 3 Teile eines in Anspruch 1 definierten Farbstoffs mit der Formel (1) und Wasser enthält, wobei der Farbstoff vollständig gelöst ist.

9. Verfahren zur Färbung einer Textilie, indem darauf eine flüssige Farbstoffpräparation nach Anspruch 8 aufgebracht wird.

## Revendications

1. Colorant dérivé de triphénodioxazine, répondant à la formule (1) : 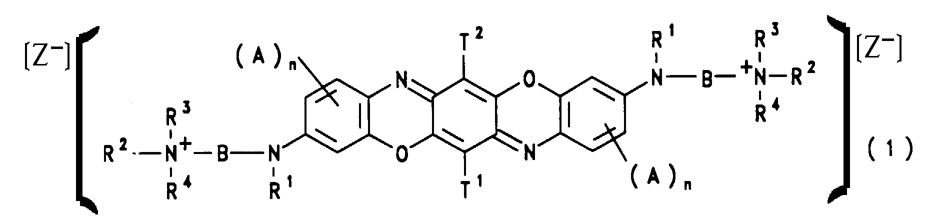 dans laquelle :
chacun des groupes R¹ et R² représente, indépendamment, l'hydrogène, un halogène, un groupe alkyle, alkoxy, aryle, aryloxy, cyano, amino facultativement substitué ou un groupe ester d'acide carboxylique ;
A représente un halogène, un groupe alkyle ou alkoxy ;
n a la valeur 0, 1 ou 2 ;
R¹ représente l'hydrogène ou un radical hydrocarboné facultativement substitué ;
B représente un radical hydrocarboné divalent facultativement substitué ;
chacun des groupes R², R³ et R⁴ représente, indépendamment, l'hydrogène ou un radical hydrocarboné facultativement substitué ; et
Z⁻ représente un groupe HCCO⁻ ou CH₃CHOHCOO⁻.

2. Colorant suivant la revendication 1, dans lequel R¹ et R² représentent l'un et l'autre un groupe halogéno ou alkyle en C₁ à C₄.

3. Colorant suivant l'une quelconque des revendications précédentes, dans lequel n est égal à 0.

4. Colorant suivant l'une quelconque des revendications précédentes, dans lequel R¹, R², R³ et R⁴ représentent chacun indépendamment H ou un groupe alkyle en C₁ à C₄.

5. Colorant suivant la revendication 4, dans lequel R¹, R², R³ et R⁴ représentent chacun H.

6. Colorant suivant l'une quelconque des revendications précédentes, dans lequel B représente un radical alkylène, aralkylène ou arylène facultativement substituté.

7. Colorant suivant l'une quelconque des revendications précédentes, dans lequel B représente un radical alkylène contenant moins de 7 atomes de carbone.

8. Préparation de colorant liquide comprenant au moins trois parties d'un colorant de formule (1), répondant à la définition suivant la revendication 1, et de l'eau, dans laquelle ledit colorant est totalement dissous.

9. Procédé pour colorer une matière textile par application à cette matière textile d'une préparation de colorant liquid suivant la revendication 8.
